**Europäisches Patentamt**

**European Patent Office**

**Office européen des brevets**

(19)

(11) Veröffentlichungsnummer: **0 191 131 B1**

# (12) EUROPÄISCHE PATENTSCHRIFT

(45) Veröffentlichungstag der Patentschrift: **17.07.91**  (51) Int. Cl.⁵: **B60T 8/00**

(21) Anmeldenummer: **85109358.3**

(22) Anmeldetag: **25.07.85**

(54) Strassenfahrzeug mit Blockierschutz.

(30) Priorität: **15.02.85 DE 3505268**

(43) Veröffentlichungstag der Anmeldung:
**20.08.86 Patentblatt 86/34**

(45) Bekanntmachung des Hinweises auf die
Patenterteilung:
**17.07.91 Patentblatt 91/29**

(84) Benannte Vertragsstaaten:
**DE FR GB IT**

(56) Entgegenhaltungen:
**EP-A- 0 128 583**
**FR-A- 2 442 165**
**GB-A- 2 130 313**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Petersen, Erwin
Fliederweg 22
W-3051 Wunstorf(DE)**
Erfinder: **Rode, Konrad
An der Rotbuche 3
W-3016 Seelze 3(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

## Beschreibung

Die Erfindung bezieht sich auf ein Straßenfahrzeug mit Blockierschutz gemäß dem Oberbegriff des Patentanspruchs 1.

Der Blockierschutz soll im Notfall bei starker Bremsung die Räder des Fahrzeugs am Blockieren hindern und so bei möglichst kurzem Bremsweg die Lenkfähigkeit erhalten.

Für PKW wird meist ein Blockierschutz-System verwendet, das an den Vorderrädern mit Individual-Regelung (IR) und an den Hinterrädern nach dem Select-Low-Prinzip (SLR) regelt.

Die Individualregelung an den Vorderrädern ermöglicht einen optimal kurzen Bremsweg, erzeugt jedoch starke Giermomente bei Bremsungen auf Fahrbahnen mit seitenweise unterschiedlichem Reibwert ($\mu$-Split). Es ist deshalb erforderlich, diese Giermomente abzuschwächen. Hierzu ist vor allem bei Nutzfahrzeugen bekannt, an den Vorderrädern eine modifizierte Individual-Regelung (MIR) vorzusehen, durch welche die Bremskraftunterschiede an den Vorderrädern begrenzt werden (DE-A 28 51 107).

Bei PKW ist es alternativ zur modifizierten Individual-Regelung an den Vorderrädern üblich, die Richtungsstabilität des Fahrzeugs durch die obenerwähnte Select-Low-Regelung an den Hinterrädern zu gewährleisten Dies bedeutet einen verringerten Bauaufwand gegenüber einer Individual-Regelung, da nur ein gemeinsames Regelventil für die Hinterachse benötigt wird, wenn beide Hinterradbremsen einem gemeinsamen hydraulischen Bremskreis zugeordnet sind .

Ein derartiges, beim PKW übliches Regelkonzept führt jedoch bei Bremsungen auf Fahrbahnen mit seitenweise unterschiedlichen Reibwerten dann zu einer unzureichenden Stabilität des Fahrzeugs, wenn das Differential der angetriebenen Hinterachse formschlüssig gesperrt ist. Dies ist insbesondere bei Nutzfahrzeugen oder PKW mit Allrad-Antrieb möglich. In diesem Fall verhindert die Differential-Sperre, daß das Rad auf dem niedrigeren Reibwert vorzeitig in den Schlupf läuft, wodurch die Select-Low-Regelung den Bremsdruck auch an dem Rad auf dem hohen Reibwert senken würde. Statt dessen wird der Bremsdruck an beiden Rädern erst dann gesenkt, wenn beide Räder - quasi synchron - entsprechende Verzögerungs- oder Schlupfwerte (± b, λ ) aufweisen. Dies entspricht angenähert einer Select-High-Regelung (SHR). Dabei wird an beiden Hinterrädern, wie an den individuell geregelten Vorderrädern, der Kraftschluß beim geregelten Bremsen voll ausgenutzt, so daß ein größeres Giermoment als ohne eingelegte Differentialsperre auf das Fahrzeug wirkt.

Um diese Problematik zu umgehen, ist es denkbar, und von namhaften Fahrzeug-Herstellern praktiziert, bei Fahrzeugen im Sperren-Betrieb das Blockierschutz-System abzuschalten.

Eine andere denkbare Möglichkeit besteht darin, beim Ansprechen des Blockierschutzes die Sperre(n) sofort zu öffnen.

Bei der ersten Möglichkeit wird also auf die obengenannten Vorteile des Blockierschutzes verzichtet. Für die zweite Methode sind übliche Differential-sperrvorrichtungen nichtgeeignet, so daß eine aufwendige Neukonstruktion nötig wäre.

Der Erfindung liegt die Aufgabe zugrunde, ein Straßenfahrzeug der eingangs genannten Art so auszubilden, daß auch beim Einlegen der Differentialsperre eine ausreichende Fahrstabilität bei geregelten Bremsungen auf Straßen mit unterschiedlichem Reibwert ermöglicht wird.

Diese Aufgabe wird durch die im Patentanspruch 1 und im nebengeordneten Patentanspruch 2 enthaltene Erfindung gelöst. Die Unteransprüche enthalten zweckmäßige Weiterbildungen der Erfindung.

Bei Anwendung der Erfindung wird beim Einlegen der Hinterachs-Differentialsperre das Blockierschutz-Regelkonzept in der Weise umgeschaltet, daß anstelle der Individual-Regelung eine modifizierte Individual-Regelung, eine Select-Low-Regelung, oder eine andere Gier- und Lenkmoment abschwächende Regellogik an den Vorderrädern wirkt. Die Select-Low-Regellogik der Hinterräder kann dagegen unverändert erhalten bleiben oder beispielsweise auf Individual-Regelung umgeschaltet werden, wobei durch die Sperre die Regelung der Hinterräder ohnehin praktisch synchronisiert wird.

Durch die Vorderachsumschaltung wird erreicht, daß die Giermoment-Abschwächung auf seitenweise unterschiedlichen Fahrbahnen ($\mu$-Split) nunmehr durch die Vorderachsregelung erbracht wird. Die hierdurch gegenüber der Individual-Regelung verursachte Bremswegverlängerung wird dabei in Kauf genommen, zumal andererseits das Sperren der Hinterräder bremswegverkürzend wirkt.

Eine weitere Möglichkeit besteht darin, die Vorderachs-Regelung von Individualregelung (IR) auf Select-Low-Regelung (SLR) umzuschalten, und die Hinterachsregelung von Select-Low-Regelung (SLR) auf Individualregelung (IR) umzuschalten. Dies würde also eine Vertauschung der Regellogiken von Vorderachse- und Hinterachse bedeuten.

Eine dauernde Umschaltung auf beispielsweise eine modifizierte Individual-Regelung (MIR) an den Vorderrädern ist dagegen nicht möglich, da damit in Verbindung mit der Hinterachs-Select-Low-Regelung die Bremswege auf Fahrbahnen mit $\mu$-Split zu lang werden würden.

Daß die Differentialsperre eingelegt ist, kann entweder durch geeignete Schalter oder Anzeigesignale (Lampen) der Blockierschutz-Elektronik mitgeteilt werden, oder aus dem synchronen Radverhalten bzw. dem quasi-synchronen Auftreten von Regelsignalen (-b, +b, λ ) automatisch von der Blockierschutz-Elektronik erkannt werden.

Letzteres hat den Vorteil, daß keine weiteren Schaltsignale in die Elektronik eingeleitet werden müssen, wodurch sich ein geringerer Kosten- und Bauaufwand ergibt. Diese automatische Erkennung erfordert aber je einen Sensor an beiden Hinterrädern, wie es von 4-Kanal-Systemen mit Select-Low-Logik schon bekannt ist.

Bei einem PKW-3-Kanal-System mit Kardanwellensensierung wird vorteilhaft der zuerst genannte Schalter zur Sensierung der Differentialsperre eingesetzt.

## Patentansprüche

1. Straßenfahrzeug mit Blockierschutz,
mit folgenden Merkmalen:
   a) die Hinterräder sind mit einer Blockierschutzregelung nach dem Select-Low-Prinzip versehen,
   b) die Vorderräder sind individuell geregelt,
   c) die angetriebene Hinterachse ist mit einer einschaltbaren Differential-Sperre versehen;

   gekennzeichnet durch folgendes Merkmal:

   d) es ist eine Einrichtung vorgesehen,die das Einlegen der Differential-Sperre erkennt und bei eingelegter Differential-Sperre die Logik der Blockierschutzelektronik der Vorderachse von Individualregelung (IR) auf modifizierte Individualregelung (MIR) umschaltet.

2. Straßenfahrzeug mit Blockierschutz,
mit folgenden Merkmalen:
   a) die Hinterräder sind mit einer Blockierschutzregelung nach dem Select-Low-Prinzip versehen,
   b) die Vorderräder sind individuell geregelt,
   c) die angetriebene Hinterachse ist mit ein r einschaltbaren Differential-Sperre versehen;

   gekennzeichnet durch folgendes Merkmal:

   d) es ist eine Einrichtung vorgesehen, die das Einlegen der Differential-Sperre erkennt und bei eingelegter Differential-Sperre die Logik der Blockierschutzelektronik der Vorderachse von Individualregelung (IR) auf Select-Low-Regelung (SLR) oder eine andere Gier- und Drehmoment abschwächende Regellogik umschaltet.

3. Straßenfahrzeug nach Anspruch 2,
dadurch gekennzeichnet, daß die Einrichtung die Logik der Blockierschutzelektronik der Vorderachse von Individualregelung (IR) auf Select-Low-Regelung (SLR) und die Logik der Hinterachse von Select-Low-Regelung (SLR) auf Individual-Regelung (IR) umschaltet.

4. Straßenfahrzeug nach einem oder mehreren der Ansprüche 1 bis 3,
dadurch gekennzeichnet, daß als Einrichtung zum Erkennen der eingelegten Differential-Sperre ein zugeordneter Schalter, Wegsensor oder eine zugeordnete Anzeigelampe verwendet wird.

5. Straßenfahrzeug nach einem oder mehreren der Ansprüche 1 bis 3,
dadurch gekennzeichnet, daß als Einrichtung zum Erkennen der eingelegten Differential-Sperre ein Teil der Blockierschutzelektronik vorgesehen ist, welcher aus den synchronen Radgeschwindigkeiten oder aus dem synchronen Auftreten von Regelsignalen (-b, +b, λ ) die eingelegte Differential-Sperre erkennt.

## Claims

1. A road vehicle with an anti-lock system, having the following features:
   a) the rear wheels are provided with an anti-lock control according to the select-low principle,
   b) the front wheels are individually controlled,
   c) the driven rear axle is provided with an engageable differential lock;

   characterized by the following feature:

   d) there is provided an arrangement which recognizes the engagement of the differential lock, and when the differential lock is engaged the logic of the anti-lock electronics of the front axle changes over from individual control (IR) to modified individual control (MIR).

2. A road vehicle with an anti-lock system, having the following features:
   a) the rear wheels are provided with an anti-lock control according to the select-low principle,
   b) the front wheels are individually controlled,
   c) the driven rear axle is provided with an engageable differential lock;

characterized by the following feature:

d) there is provided an arrangement which recognizes the engagement of the differential lock, and when the differential lock is engaged the logic of the anti-lock electronics of the front axle changes over from individual control (IR) to select-low control (SLR) or a different control logic reducing yawing and turning moment.

3. A road vehicle according to claim 2, characterized in that the arrangement changes over the logic of the anti-lock electronics of the front axle from individual control (IR) to select-low control (SR), and the logic of the rear axle from select-low control (SLR) to individual control (IR).

4. A road vehicle according to one or more of claims 1 to 3, characterized in that an associated switch, a displacement sensor or an associated indicator lamp is used as the arrangement for recognizing that the differential lock is engaged.

5. A road vehicle according to one or more of claims 1 to 3, characterized in that a part of the anti-lock electronics is provided as the arrangement for recognizing that the differential lock is engaged, which part recognizes that the differential lock is engaged from the synchronous wheel speeds or from the synchronous appearance of control signals (-b, +b, λ).

**Revendications**

1. Véhicule routier avec protection antiblocage, avec les caractéristiques suivantes :
   a) les roues arrière sont munies d'une régulation antiblocage selon le principe "Select-Low",
   b) les roues avant sont régulées individuellement,
   c) l'essieu arrière entraîné est muni d'un verrou de différentiel activable;
   caractérisé par la caractéristique suivante :
   d) il est prévu un dispositif qui identifie l'engagement du verrou de différentiel et qui, lorsque le verrou de différentiel est engagé, commute la logique de l'électronique de protection antiblocage de l'essieu avant de la régulation individuelle (IR) à la régulation individuelle modifiée (MIR).

2. Véhicule routier avec protection antiblocage, avec les caractéristiques suivantes :
   a) les roues arrière sont munies d'une régulation de protection antiblocage selon le principe "Select-Low",
   b) les roues avant sont régulées individuellement,
   c) l'essieu arrière entraîné est muni d'un verrou de différentiel activable;
   caractérisé par la caractéristique suivante :
   d) il est prévu un dispositif qui discerne l'engagement du verrou de différentiel et qui, lorsque le verrou de différentiel est engagé, commute la logique de l'électronique de protection antiblocage de l'essieu avant, de la régulation individuel le (IR) à la régulation "Select-Low" (SLR) ou à une autre logique de régulation affaiblissant le couple d'embardée et de rotation.

3. Véhicule routier selon revendication 2, caractérisé, par le fait que le dispositif commute la logique de l'électronique de protection antiblocage de l'essieu avant, de la régulation individuelle (IR) à la régulation "select-Low" (SLR), et commute la logique de l'essieu arrière, de la régulation "Select-Low" (SLR) à la régulation individuelle (IR).

4. Véhicule routier selon une ou plusieurs des revendications 1 à 3, caractérisé par le fait que pour discerner le verrou de différentiel engagé on utilise un capteur de déplacement, un commutateur conjugué, ou une lampe indicatrice conjuguée.

5. Véhicule routier selon une ou plusieurs des revendications 1 à 3, caractérisé par le fait qu'il est prévu, en tant que dispositif pour discerner le verrou de différentiel engagé, une partie de l'électronique de protection antiblocage, laquelle partie discerne l'engagent du verrou de différentiel à partir des vitesses synchrones des roues ou à partir de l'occurrence synchrone de signaux de réglage (-b, +b, λ).